# EUROPEAN PATENT APPLICATION

(11) **EP 4 287 674 A1**
(43) Date of publication of application: **06.12.2023**
(21) Application number: 21921905.2
(22) Date of filing: 29.01.2021
(51) Int. Cl.: H04W 8/20

(54) **EXCHANGE METHOD AND APPARATUS FOR MULTI-SUBSCRIBER IDENTIFICATION MODULE CHARACTERISTIC INFORMATION, AND COMMUNICATION DEVICE**

(71) Applicant: Beijing Xiaomi Mobile Software Co., Ltd., Beijing 100085 (CN)
(72) Inventor: HONG, Wei, Beijing 100085 (CN)
(74) Representative: dompatent von Kreisler Selting Werner - Partnerschaft von Patent- und Rechtsanwälten mbB
(86) International application number: PCT/CN2021/074525
(87) International publication number: WO 2022/160304

(57) **Abstract**

Provided are an exchange method and apparatus for multi-subscriber identification module characteristic information, and a communication device, which relate to the technical field of mobile communications. The solution involves: sending first indication information to an access network device, wherein the first indication information is used for determining whether a UE is currently in a multi-subscriber identification module state; and receiving second indication information sent by the access network device, wherein the second indication information is used for indicating multi-subscriber identification module characteristic information supported by a core network device and/or the access network device. Therefore, resources used during an exchange process of multi-subscriber identification module characteristic information are reduced.

## Description

### TECHNICAL FIELD

The present disclosure relate to the field of mobile communication technologies, and more particularly, to a method and apparatus for exchanging multi-subscriber identity module feature information, and a communication device.

### BACKGROUND

At present, most of User Equipments (UEs) can support a plurality of subscriber identity modules, so that different subscriber identity modules can be used to process different services. For example, according to services and tariff provided by different operators, a user can choose to use a subscriber identity module 1 to process a voice service, and use a subscriber identity module 2 to process a data service.

In the related art, in order to ensure the reliability of various UE services, it is proposed that the UE needs to report its current capabilities to a network. For example, at a stage of registering a reporting capability, the UE sends all multi-subscriber identity module features supported by the UE to a network device, respectively, and after receiving the same, the network device feeds back to the UE which multi-subscriber identity module features the network device supports. Thus, the UE and the network device perform service processing based on the jointly supported multi-subscriber identity module feature.

In a case where the UE supports many multi-subscriber identity module features, the UE needs to use more resources to negotiate the multi-subscriber identity module features with the network device, which wastes resources.

### SUMMARY

In an aspect, embodiments of the present disclosure provide a method for exchanging multi-subscriber identity module feature information, applied to a User Equipment (UE), and the method includes:
sending first indication information to an access network device, wherein the indication information is used to determine whether the UE is currently in a multi-subscriber identity module state; and
receiving second indication information sent by the access network device, wherein the second indication information is used to indicate multi-subscriber identity module feature information supported by a core network device and/or the access network device.
first indication information

In another aspect, embodiments of the present disclosure provide a method for exchanging multi-subscriber identity module feature information, applied to an access network device, and the method includes:
receiving first indication information sent by a User Equipment (UE), wherein the indication information is used to determine whether the User Equipment (UE) is currently in a multi-subscriber identity module state;
sending the first indication information to a core network device;
receiving second indication information sent by the core network device, wherein the second indication information is used to indicate multi-subscriber identity module feature information supported by the core network device and/or the access network device; and
sending the second indication information to the UE.

The first indication information and the access network device. In another aspect, embodiments of the present disclosure provide a method for exchanging multi-subscriber identity module feature information, applied to an access network device and a core network device, and the method includes:
receiving first indication information sent by an access network device, wherein the first indication information is used to determine whether a User Equipment (UE) is currently in a multi-subscriber identity module state; and
sending second indication information to the core network device, wherein the second indication information is used to indicate multi-subscriber identity module feature information supported by the core network device and/or the access network device.

In another aspect, embodiments of the present disclosure provide an apparatus for exchanging multi-subscriber identity module feature information, applied to a User Equipment (UE), and the apparatus includes:
a sending module, configured to send first indication information to an access network device, wherein the indication information is used to determine whether the UE is currently in a multi-subscriber identity module state; and
a receiving module, configured to receive second indication information sent by the access network device, wherein the second indication information is used to indicate multi-subscriber identity module feature information supported by a core network device and/or the access network device.

In another aspect, embodiments of the present disclosure provide an apparatus for exchanging multi-subscriber identity module feature information, applied to an access network device, and the apparatus includes:
a receiving module, configured to receive first indication information sent by a User Equipment (UE), wherein the indication information is used to determine whether the User Equipment (UE) is currently in a multi-subscriber identity module state; and
a sending module, configured to send the first indication information to a core network device;
wherein the receiving module is further configured to receive second indication information sent by the core network device, wherein the

In another aspect, embodiments of the present disclosure provide an apparatus for exchanging multi-subscriber identity module feature information, applied to a core network device, and the apparatus includes:
a receiving module, configured to receive first indication information sent by an access network device, wherein the first indication information is used to determine whether a User Equipment (UE) is currently in a multi-subscriber identity module state; and
a sending module, configured to send second indication information to the access network device, wherein the second indication information is used to indicate multi-subscriber identity module feature information supported by the core network device and/or the access network device.

In another aspect, embodiments of the present disclosure provide a communication device, including a processor, a transceiver, a memory and a computer program stored on the memory, wherein the processor runs the computer program to implement the method for exchanging the multi-subscriber identity module feature information in any aspect described above.

In another aspect, embodiments of the present disclosure provide a computer storage medium storing an executable program, wherein the executable program, when executed by a processor, can implement the method for exchanging the multi-subscriber identity module feature information in any aspect described above.

In another aspect, embodiments of the present disclosure provide a computer program product including a computer program, wherein the computer program, when executed by a processor in a communication device, implements the method for exchanging the multi-subscriber identity module feature information in any aspect described above.

In the method and apparatus for exchanging the multi-subscriber identity module feature information, and the communication device, the UE only needs to send, to the access network device, the first indication information for indicating whether it is currently in the multi-subscriber identity module state, and the negotiation of the multi-subscriber identity module feature information with the network side can be realized, which reduces resources occupied during the exchange of the multi-subscriber identification module feature information between the UE and the network device.

Additional aspects and advantages of the present disclosure will be provided in part in the following description, and in part will be apparent from the following description, or learned by practice of the present disclosure.

### BRIEF DESCRIPTION OF THE DRAWINGS

The above and/or additional aspects and advantages of the present disclosure will become apparent and easy to understand from the following description of embodiments in conjunction with the accompanying drawings, in which:
FIG. 1 is a schematic flowchart of a method for exchanging multi-subscriber identity module feature information provided by an embodiment of the present disclosure;
FIG. 2 is a schematic flowchart of another method for exchanging multi-subscriber identity module feature information provided by an embodiment of the present disclosure;
FIG. 3 is a schematic flowchart of another method for exchanging multi-subscriber identity module feature information provided by an embodiment of the present disclosure;
FIG. 4 is a schematic flowchart of another method for exchanging multi-subscriber identity module feature information provided by an embodiment of the present disclosure;
FIG. 5 is a schematic flowchart of another method for exchanging multi-subscriber identity module feature information provided by an embodiment of the present disclosure;
FIG. 6 is a schematic signaling diagram of another method for exchanging multi-subscriber identity module feature information provided by an embodiment of the present disclosure;
FIG. 7 is a schematic structural diagram of an apparatus for exchanging multi-subscriber identity module feature information provided by an embodiment of the present disclosure;
FIG. 8 is a schematic structural diagram of another apparatus for exchanging multi-subscriber identity module feature information provided by an embodiment of the present disclosure;
FIG. 9 is a schematic structural diagram of another apparatus for exchanging multi-subscriber identity module feature information provided by an embodiment of the present disclosure; and
FIG. 10 is a schematic structural diagram of a communication device provided by an embodiment of the present disclosure.

### DETAILED DESCRIPTION

Embodiments of the present disclosure are described in detail below, examples of which are illustrated in the accompanying drawings, and the same or similar reference numerals denote the same or similar elements or elements having the same or similar functions throughout the drawings. The embodiments described below with reference to the accompanying drawings are illustrative, are intended to explain the present disclosure, and should not be construed as limiting the present disclosure.

In the related art, it is proposed that a UE needs to report its current capabilities to a network. In a case where the UE supports many multi-subscriber identity module features, the UE needs to use more resources to negotiate the multi-subscriber identity module features with a network device, which wastes resources.

In the present disclosure, use scenarios of respective sub-features of multi-subscriber identity module features are considered. Some sub-features do not need to be initiated by the UE, that is, the network device does not need to know whether the UE supports these sub-features, thus a method and apparatus for exchanging multi-subscriber identity module feature information, and a communication device are proposed. In the present disclosure, the UE only needs to report to the network device whether it supports the multi-subscriber identity module feature, and then the network device returns to the UE a multi-subscriber identity module feature supported by itself, which greatly reduces resources occupied during the negotiation of the multi-subscriber identification module feature between the UE and the network device.

In the present disclosure, a subscriber identity module may be any module that can uniquely the subscriber identity, which may be, for example, a Subscriber Identity Module (SIM), or a Universal Subscriber Identity Module (USIM). In the following, embodiments of the present disclosure provide a method and apparatus for exchanging multi-subscriber identity module feature information, and a communication device in combination with various embodiments.

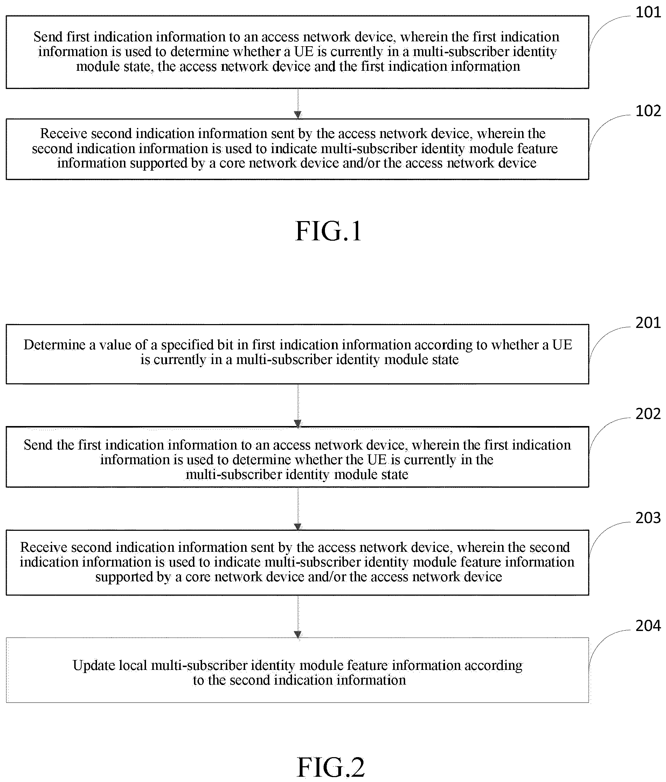

FIG. 1 is a schematic flowchart of another method for exchanging multi-subscriber identity module feature information provided by an embodiment of the present disclosure, and the method can be performed by a UE. As shown in FIG. 1, the method for exchanging the multi-subscriber identity module feature information includes the following steps 101 and 102.

In the step 101, first indication information is sent to an access network device, and the first indication information is used to determine whether the UE is currently in a multi-subscriber identity module state. The access network device and the first indication information

In some embodiments of the present disclosure, the UE may first determine a registration state of each local subscriber identity module. If at least two subscriber identity modules are in a normal registration state, it can be determined that the UE is currently in the multi-subscriber identity module state, that is, the UE supports the multi-subscriber identity module feature; otherwise, it can be determined that the UE is not currently in the multi-subscriber identity module state, that is, the UE does not support the multi-subscriber identity module feature.

In the present disclosure, the UE may send the first indication information to the access network device through a designated negotiation resource for the multi-subscriber identity module feature. Alternatively, the UE may also send the first indication information to the access network device by carrying subscriber identity module state information in other information. For example, the UE may send the first indication information to the access network device through a registration request, or the UE may also send the first indication information to the access network device through a service request, or the UE may also send the first indication information to the access network device through a position update request and the like, which is not limited by the present disclosure.

In some embodiments of the present disclosure, in order to reduce the resources occupied when the UE negotiates with the network device on the multi-subscriber identity module feature, whether the UE is currently in the multi-subscriber identity module state may be indicated by a value of a specified bit in the first indication information in the present disclosure.

Alternatively, since the multi-subscriber identity module feature may include at least one of the following: a paging cause (Paging cause), a busy indication (BUSY indication), multi-subscriber identity module leaving, a filtering rule (Filtering) and paging collision avoidance (Paging collision avoidance), the UE can correspondingly use different values of the specified bit to indicate specific multi-subscriber identity module features supported by the UE. For example, when the UE supports the BUSY indication feature, the specified bit can take a value of 1; when the UE supports the Filtering feature, the specified bit can take a value of 2; when the UE supports the Paging collision avoidance feature, the specified bit can take a value of 3; and when the UE supports all multi-subscriber identity module features, the specified bit can take a value of 4, etc., which is not limited by the present disclosure.

The Paging cause feature indicates that the network will add a paging cause value when sending a paging request to the UE, for example, a value of 1 indicates a voice service, and the UE can determine whether to respond to the paging when receiving this value. The BUSY indication feature indicates that when a card 2 in the UE receives a paging message while a card 1 in the UE is performing a service, if the UE decides not to respond to the paging of the card 2, it will send the busy indication to the network, so that the network can know that the UE has successfully received the paging, and it can stop paging. The Filtering feature indicates that when the subscriber identity module 1 in the UE sends the filtering rule to the network, the network can filter downlink data according to the filtering rule when sending the downlink data to the subscriber identity module 1. The Paging collision avoidance feature indicates that when the subscriber identity module 1 and the subscriber identity module 2 in the UE are in an idle state, the subscriber identity module 1 and the subscriber identity module 2 will periodically monitor the paging of their respective networks, respectively, and monitoring resources overlap, resulting in mutual interference. The multi-subscriber identity module leaving means that when the subscriber identity module 2 in the UE receives the paging message while the subscriber identity module 1 in the UE is performing the service, if the UE decides to respond to the paging of the subscriber identity module 2, the subscriber identity module 1 needs to leave a network where the subscriber identity module 1 is performing the service.

It should be noted that the above-mentioned various multi-subscriber identity module feature information is only an example, and any other multi-subscriber identity module feature information that is not mentioned can also be exchanged by the exchange method in the present disclosure.

In some embodiments of the present disclosure, the specified bit may be a bit in a specified negotiation message for the multi-subscriber identity module feature information, or may also be a bit in the registration request, the service request or the position update request.

In some embodiments of the present disclosure, in order to further reduce the resources occupied when the UE negotiates with the network device on the multi-subscriber identity module feature, the UE may carry the first indication information in the registration request, the service request or the position update request only when it is in the multi-subscriber identity module state, that is, when it supports the multi-subscriber identity module feature in the present disclosure. However, when the UE does not support the multi-subscriber identity module feature, the UE does not carry the first indication information in the registration request, the service request or the position update request. That is, a format of the registration request, the service request or the position update request sent when the UE supports the multi-subscriber identity module feature is different from the format of the registration request, the service request or the position update request sent when the UE does not support the multi-subscriber identity module feature.

It should be noted that the above specified bit may be one bit, or may also be a plurality of bits, which is not limited by the present disclosure.

In the step 102, second indication information sent by the access network device is received, and the second indication information is used to indicate multi-subscriber identity module feature information supported by a core network device and/or the access network device.

In some embodiments of the present disclosure, the UE may receive the second indication information sent by the access network device through a specified exchange message for the multi-subscriber identity module feature information. Alternatively, the UE may also parse a registration reception message, a service response message or the like to obtain the second indication information sent by the access network device.

In some embodiments of the present disclosure, in order to realize the exchange and synchronization of the multi-subscriber identity module feature information between the UE and the network device, as soon as the UE sends the first indication information to the access network device, the access network device can forward the first indication information to a core network device, so that the core network device can send the second indication information to the UE according to the multi-subscriber identity module feature information supported by the access network device and/or the core network device.

Since the multi-subscriber identity module feature information may include multiple pieces of information, there may also be multiple forms of the second indication information received by the UE.

For example, different types of second indication information correspond to different subscriber identity module feature information combinations. Second indication information of type A indicates that the access network device and the core network device support all multi-subscriber identity module feature information, second indication information of type B indicates that the access network device and the core network device support the paging cause and the busy indication, and second indication information of type C indicates that the access network device and the core network device support the busy indication and the multi-subscriber identity module leaving, etc.. Then the UE can determine that the access network device and the core network device support all multi-subscriber identity module feature information when obtaining the second indication information of type A.

Alternatively, different subscriber identity module feature information corresponds to different values of a specified bit in the second indication information. That is, the different values of the specified bit in a registration reception message, a service response message or an exchange message for the multi-subscriber identity module feature information indicate different multi-subscriber identity module feature information supported by the access network device and/or the core network device.

For example, when the access network device and the core network device support the BUSY indication feature, this bit can take a value of 1. When the access network device and the core network device support the Filtering feature, this bit can take a value of 2. When the access network device and the core network device support the Paging collision avoidance feature, this bit can take a value of 3, and so on, which is not limited by the present disclosure.

In some embodiments of the present disclosure, as soon as the UE determines the multi-subscriber identity module feature information supported by the access network device and the core network device, it can update local multi-subscriber identity module feature information, so that it can control the subsequent communication process with the network side based on the updated multi-subscriber identity module feature information.

For example, if the UE supports the BUSY indication feature, and determines that the access network device does not support the BUSY indication according to the second indication information returned by the access network device, the UE can disable or delete the local BUSY indication, so that when a service triggers the BUSY indication, the BUSY indication is not sent to the access network device.

Alternatively, if the UE supports the BUSY indication feature, and determines that the access network device and the core network device also support the BUSY indication according to the second indication information returned by the access network device, the UE can send the BUSY indication to the access network device when the service triggers the BUSY indication.

According to the method for exchanging the multi-subscriber identity module feature information in embodiments of the present disclosure, during the exchange of the multi-subscriber identity module feature information with the network side, the UE only sends to the access network device the first indication information for determining whether it is currently in the multi-subscriber identity module state, thereby saving resources used in the negotiation process.

FIG. 2 is a schematic flowchart of another method for exchanging multi-subscriber identity module feature information provided by an embodiment of the present disclosure, and the method can be performed by a UE. As shown in FIG. 2, the method for exchanging the multi-subscriber identity module feature information includes the following steps 201 to 204.

In the step 201, it is determined a value of a specified bit in first indication information according to whether it is currently in the multi-subscriber identity module state.

In the present disclosure, in order for the network side to accurately determine the current state of the UE, no matter whether the UE is currently in the multi-subscriber identity module state, the UE may send the first indication information to the access network device to indicate whether the UE is currently in the multi-subscriber identity module state.

In some embodiments of the present disclosure, in order to reduce the resources occupied when the UE negotiates with the network device on the multi-subscriber identity module feature, whether the UE is currently in the multi-subscriber identity module state may be indicated by different values of a specified bit in the first indication information in the present disclosure.

For example, when the UE determines that it is currently in the multi-subscriber identity module state, that is, when it can support the multi-subscriber identity module feature, it can set the value of the specified bit to 1; otherwise, it can set the value of the specified bit to 0 or a value other than 1, etc..

Alternatively, since the multi-subscriber identity module feature may include at least one of the following: a paging cause (Paging cause), a busy indication (BUSY indication), multi-subscriber identity module leaving, a filtering rule (Filtering) and paging collision avoidance (Paging collision avoidance), the UE can correspondingly use different values of the specified bit to indicate specific multi-subscriber identity module features supported by the UE. For example, when the UE is not in the multi-subscriber identity module state, the specified bit can take a value of 0; when the UE supports the BUSY indication feature, the specified bit can take a value of 1; when the UE supports the Filtering feature, the specified bit can take a value of 2; when the UE supports the Paging collision avoidance feature, the specified bit can take a value of 3; and when the UE supports all multi-subscriber identity module features, the specified bit can take a value of 4, etc., which is not limited by the present disclosure.

In the step 202, the first indication information is sent to an access network device, and the first indication information is used to determine whether the UE is currently in the multi-subscriber identity module state.

For a specific implementation form of the first indication information and a message type carrying the first indication information, etc., reference may be made to the detailed description of any other embodiment of the present disclosure, which will not be repeated here.

In the step 203, second indication information sent by the access network device is received, and the second indication information is used to indicate multi-subscriber identity module feature information supported by a core network device and/or the access network device.

For a specific implementation form of the second indication information or a message type carrying the second indication information, etc., reference may be made to the detailed description of any other embodiment of the present disclosure, which will not be repeated here.

In the step 204, local multi-subscriber identity module feature information is updated according to the second indication information.

In the present disclosure, in order to facilitate the UE to communicate and exchange with the access network device and the core network device based on the multi-subscriber identity module feature information supported by the access network device and the core network device, the UE can update the local multi-subscriber identity module feature information as soon as it determines the multi-subscriber identity module feature information supported by the access network device and/or the core network device.

For example, if the UE supports the BUSY indication feature, and determines that the access network device does not support the BUSY indication according to the second indication information returned by the access network device, the UE can disable or delete the local BUSY indication, so that when a service triggers the BUSY indication, the BUSY indication is not sent to the network.

Alternatively, if the UE supports the BUSY indication feature, and determines that the access network device and the core network device also support the BUSY indication according to the second indication information returned by the access network device, the UE can send the BUSY indication to the network when the service triggers the BUSY indication.

According to the method for exchanging the multi-subscriber identity module feature information in embodiments of the present disclosure, during the exchange of the multi-subscriber identity module feature information with the network side, the UE only sends to the access network device the first indication information for determining whether it is currently in the multi-subscriber identity module state, thereby saving resources used in the negotiation process.

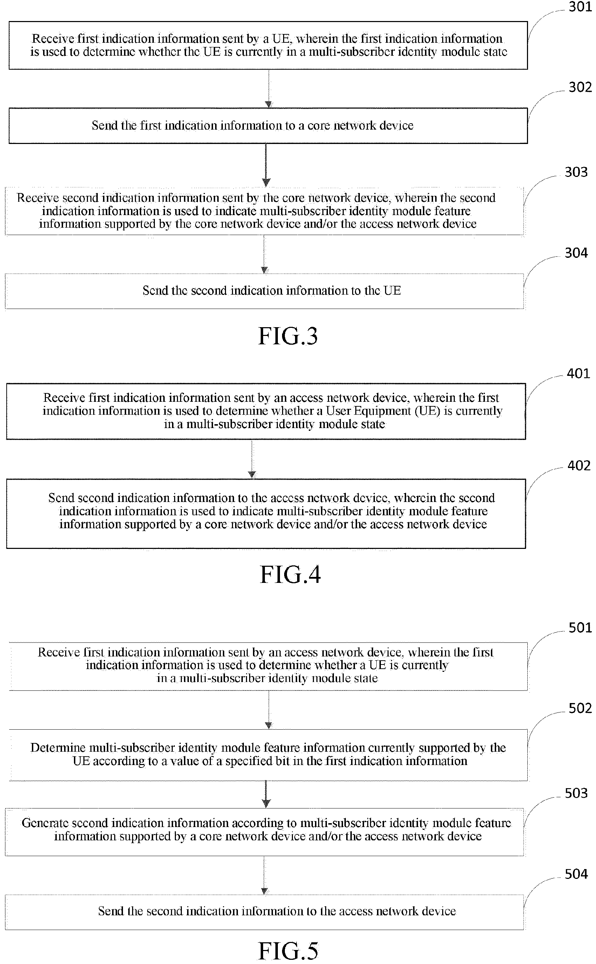

FIG. 3 is a schematic flowchart of another method for exchanging multi-subscriber identity module feature information provided by an embodiment of the present disclosure, and the method can be performed by an access network device. As shown in FIG. 3, the method for exchanging the multi-subscriber identity module feature information includes the following steps 301 to 304.

In the step 301, first indication information sent by a UE is received, and the first indication information is used to determine whether the UE is currently in a multi-subscriber identity module state.

In some embodiments of the present disclosure, the first indication information may be obtained by the access network device through a specified exchange message for the multi-subscriber identity module feature information, or may also be obtained by the access network device by parsing other information.

For example, the access network device may receive the first indication information sent by the UE through a registration request, or may also receive the first indication information sent by the UE through a service request, or may also receive the first indication information sent by the UE through a position update request. etc., which is not limited by the present disclosure.

In some embodiments of the present disclosure, the multi-subscriber identity module feature information includes at least one of the following: a paging cause, a busy indication, multi-subscriber identity module leaving, filtering, and paging collision avoidance.

It should be noted that, for a specific implementation form of the first indication information and a specific manner in which the first indication information indicates whether the UE is currently in the multi-subscriber identity module state, reference may be made to the detailed description of any embodiment of the present disclosure, which will not be repeated here.

In the step 302, the first indication information is sent to a core network device.

In the present disclosure, the access network device may send, by using a specified exchange message for the multi-subscriber identity module feature information, the first indication information to the core network device, or may carry the first indication information in the UE's registration request, service request or position update request, which is not limited by the present disclosure.

In some embodiments of the present disclosure, after obtaining the first indication information, the access network device may directly forward this information to the core network device.

Alternatively, the access network device may also first parse the first indication information to determine whether the UE is currently in the multi-subscriber identity module state, and forwards the first indication information to the AMF only when determining that the UE is currently in the multi-subscriber identity module state, thereby further reducing the resources for the negotiation of the multi-subscriber identity module feature between the UE and the network side.

In the step 303, second indication information sent by the core network device is received, and the second indication information is used to indicate multi-subscriber identity module feature information supported by the core network device and/or the access network device.

In some embodiments of the present disclosure, the access network device can obtain the second indication information returned by the core network device through the specified exchange message for the multi-subscriber identity module feature information, or the second indication information may also be carried in a registration reception message or a service request response message returned by the core network device, which is not limited by the present disclosure.

In the step 304, the second indication information is sent to the UE.

In the present disclosure, after receiving the second indication information sent by the core network device, the access network device can return the second indication information to the UE by using the specified exchange message for the multi-subscriber identity module feature information, or the second indication information may also be carried in the registration reception message or the service request response message, which is not limited by the present disclosure.

For a specific implementation form of the second indication information sent by the access network device to the UE, such as the returned message type, a manner in which the bit in the message takes a value, etc., reference can be made to the detailed description of any other embodiment of the present disclosure, which will not be repeated here.

According to the method for exchanging the multi-subscriber identity module feature information in embodiments of the present disclosure, after the access network device obtains the first indication information sent by the UE, it can send the first indication information to the core network device, and then send the second indication information returned by the core network device to the UE, thereby saving resources used during the exchange of the multi-subscriber identity module feature information between the UE and the network side.

FIG. 4 is a schematic flowchart of a method for exchanging multi-subscriber identity module feature information provided by an embodiment of the present disclosure, and the method can be performed by a core network device. As shown in FIG. 4, the method for exchanging the multi-subscriber identity module feature information includes the following steps 401 to 402.

In the step 401, first indication information sent by an access network device is received, and the first indication information is used to determine whether a User Equipment (UE) is currently in a multi-subscriber identity module state.

In some embodiments of the present disclosure, the first indication information may be obtained by the core network entity through a specified exchange message for the multi-subscriber identity module feature information, or may also be obtained by the core network entity by parsing other information.

For example, the core network device may determine the first indication information by parsing a registration request sent by the access network device, or may also determine the first indication information by parsing a service request sent by the access network device, or may also determine the first indication information by parsing a position update request sent by the access network device, etc., which is not limited by the present disclosure.

In some embodiments of the present disclosure, in order to reduce the resources occupied when the UE exchanges the multi-subscriber identity module information with the network device, whether the UE is currently in the multi-subscriber identity module state can be indicated by a value of a specified bit in the present disclosure. For example, when the value of the specified bit is 1, it indicates that the UE is currently in the multi-subscriber identity module state.

Alternatively, since the multi-subscriber identity module feature may include at least one of the following: a paging cause, a busy indication, multi-subscriber identity module leaving, a filtering rule and paging collision avoidance, different values of the specified bit can be correspondingly used to indicate specific multi-subscriber identity module features supported by the UE. For example, when the UE supports the BUSY indication feature, the specified bit can take a value of 1; when the UE supports the Filtering feature, the specified bit can take a value of 2; when the UE supports the Paging collision avoidance feature, the specified bit can take a value of 3; and when the UE supports all multi-subscriber identity module features, the specified bit can take a value of 4, etc., which is not limited by the present disclosure.

In some embodiments of the present disclosure, the specified bit may be a bit in the specified exchange message for the multi-subscriber identity module feature information, or may also be a bit in a registration request, a service request or a position update request.

In some embodiments of the present disclosure, in order to further reduce the resources occupied when the UE exchanges the multi-subscriber identity module feature information with the network device, the UE may only carry the first indication information in the registration request, the service request or the position update request only when it is in the multi-subscriber identity module state. However, when the UE is not in the multi-subscriber identity module state, the UE does not carry the first indication information in the registration request, the service request or the position update request. That is, a format of the registration request, the service request or the position update request sent when the UE is in the multi-subscriber identity module state is different from the format of the registration request, the service request or the position update request sent when the UE is not in the multi-subscriber identity module state.

It should be noted that the above specified bit may be one bit, or may also be a plurality of bits, which is not limited by the present disclosure.

For a specific implementation form of the first indication information and a message type carrying the first indication information, etc., reference may be made to the detailed description of any other embodiment of the present disclosure, which will not be repeated here.

In the step 402, second indication information is sent to the access network device, and the second indication information is used to indicate multi-subscriber identity module feature information supported by the core network device and/or the access network device.

In the present disclosure, after receiving the first indication information, the core network device may first determine the multi-subscriber identity module feature currently supported by the core network device and the access network device, and generate the second indication information, so that the multi-subscriber identity module feature information supported by the core network device and/or the access network device is sent to the UE via the access network device.

In some embodiments of the present disclosure, the core network device may send the second indication information to the access network device based on the specified exchange message for the multi-subscriber identity module feature information, or may also send the second indication information to the access network device based on a registration reception message or a service response message, etc..

The core network device may determine a type or an implementation form of the second indication information according to a specific condition of the multi-subscriber identity module feature information supported by the core network device and/or the access network device.

For example, different subscriber identity module feature information combinations correspond to different second indication information. Then the core network device sends second indication information of type A to the access network device when determining that the core network device and the access network device support all multi-subscriber identity module feature information; alternatively, the core network device send second indication information of type B to the access network device when determining that the core network device and the access network device support the busy indication and filtering rule feature information, etc..

Alternatively, different subscriber identity module feature information combinations correspond to different bit values in the exchange message, the registration reception message or the service response message. After the core network device determines the multi-subscriber identity module feature information supported by the core network device and the access network device, it can modify the value of the specified bit, and then send it to the UE via the access network device, so that the UE determines the multi-subscriber identity module feature information currently supported by the core network device and/or the access network device according to the value of each bit in the obtained second indication information.

Alternatively, the core network device can also adopt a similar manner to the UE, and use different values of a specified bit in the exchange message, the registration reception message or the service response message to indicate the specific multi-subscriber identity module feature supported by the core network device and/or the access network device. For example, when the BUSY indication feature is supported, this bit can take a value of 1; when the Filtering feature is supported, this bit can take a value of 2; when the Paging collision avoidance feature is supported, this bit can take a value of 3, and so on, which is not limited by the present disclosure.

According to the method for exchanging the multi-subscriber identity module feature information in embodiments of the present disclosure, after the core network device receives the first indication message for determining whether the UE is currently in the multi-subscriber identity module state, it sends, to the UE via the access network device, the multi-subscriber identity module feature information supported by the core network device and/or the access network device, reducing the resources occupied when the UE exchanges the multi-subscriber identity module feature information with the network device.

FIG. 5 is a schematic flowchart of another method for exchanging multi-subscriber identity module feature information provided by an embodiment of the present disclosure, and the method can be performed by a core network device. As shown in FIG. 5, the method for exchanging the multi-subscriber identity module feature information includes the following steps 501 to 504.

In the step 501, first indication information sent by an access network device is received, and the first indication information is used to determine whether a UE is currently in a multi-subscriber identity module state.

The first indication information may be sent by the UE to the access network device through a registration request, or the first indication information is sent by the UE to the access network device through a service request, or the first indication information may also be sent by the UE to the access network device through a position service request, or the first indication information may also be sent by the UE to the access network device through a specified exchange information, which is not limited by the present disclosure.

In a communication network, the UE typically sends the registration request, the service request or the position service request to the access network device, and then the access network device can forward the obtained registration request or service request to the core network device.

In the step 502, it is determined multi-subscriber identity module feature information currently supported by the UE according to a value of a specified bit in the first indication information.

In some embodiments of the present disclosure, in order to reduce resources occupied when the UE exchanges the multi-subscriber identity module feature information with the network device, whether the UE is currently in the multi-subscriber identity module state can be indicated by different values of the specified bit in the first indication information.

For example, when the value of the specified bit is set to 1, it indicates that the UE is currently in the multi-subscriber identity module state; otherwise, when the value of the specified bit can be set to 0, or any value other than 1, it indicates that the UE is not currently in the multi-subscriber identity module state, etc..

Alternatively, since the multi-subscriber identity module feature may include at least one of the following: a paging cause, a busy indication, multi-subscriber identity module leaving, a filtering rule and paging collision avoidance, different values of the specified bit can be correspondingly used to indicate specific multi-subscriber identity module features supported by the UE. For example, when the specified bit takes a value of 0, it indicates that the UE is not in the multi-subscriber identity module state; the specified bit can take a value of 1 to indicate that the UE supports the BUSY indication feature; the specified bit takes a value of 2 to indicate that the UE supports the Filtering feature; the specified bit can take a value of 3 to indicate that the UE supports the Paging collision avoidance feature; ; the specified bit takes a value of 4 to indicate that the UE supports all multi-subscriber identity module features, etc., which is not limited by the present disclosure.

In some embodiments of the present disclosure, the specified bit may be a bit in a specified negotiation resource for the multi-subscriber identity module feature, or may also be a bit in a registration request, a service request or a position service request.

It should be noted that the above specified bit may be one bit, or may also be a plurality of bits, which is not limited by the present disclosure.

In the step 503, second indication information is generated according to the multi-subscriber identity module feature information supported by the core network device and/or the access network device.

In the step 504, the second indication information is sent to the access network device.

In some embodiments of the present disclosure, in order to further reduce resources when the UE and the network negotiate the multi-subscriber identity module feature, the core network device may only determine the multi-subscriber identity module feature information currently supported by the core network device and/or the access network device after determining the UE is in the multi-subscriber identity module state, and return the second indication information to the UE via the access network.

It should be noted that, for a specific implementation form of the second indication information sent by the core network device to the access network device and a message type carrying the second indication information, reference can be made to the detailed description of any embodiment of the present disclosure, which will not be repeated here.

According to the method for exchanging the multi-subscriber identity module feature information in embodiments of the present disclosure, after the access network device obtains the first indication information sent by the UE, it can send the first indication information to the core network device, and then send the second indication information returned by the core network device to the UE, thereby saving resources used during the exchange of the multi-subscriber identity module feature information between the UE and the network side.

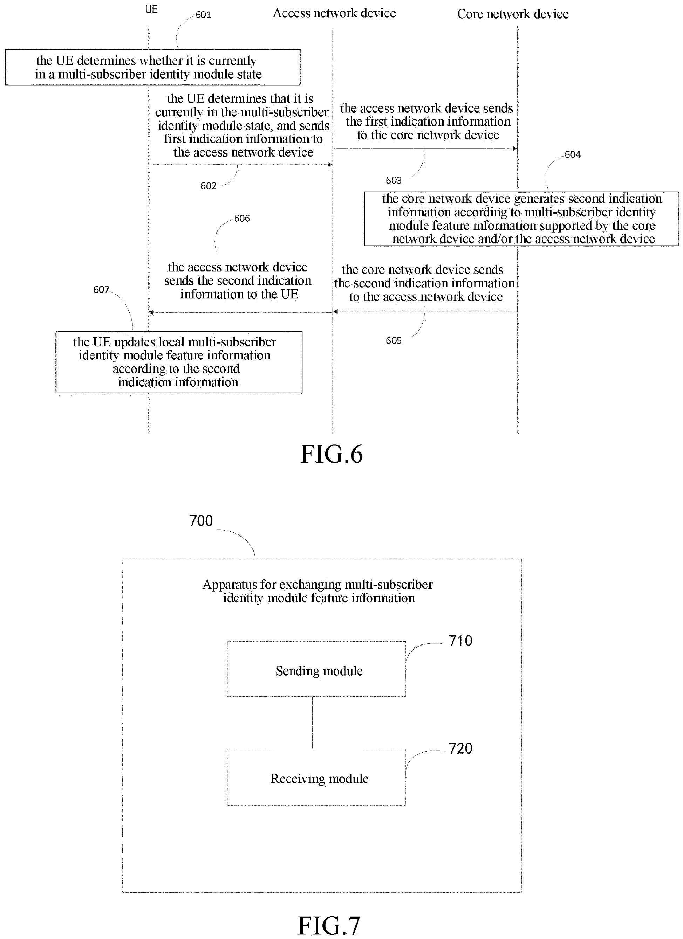

FIG. 6 is a schematic signaling diagram of a method for exchanging multi-subscriber identity module feature information provided by an embodiment of the present disclosure. As shown in FIG. 6, the method for exchanging the multi-subscriber identity module feature information includes the following steps 601 to 607.

In the step 601, a UE determines whether it is currently in a multi-subscriber identity module state.

In some embodiments of the present disclosure, the UE can determine the current multi-subscriber identity module state information of the UE according to a current usage state or a current registration state of each subscriber identity module inside the UE.

In the step 602, the UE determines that it is currently in the multi-subscriber identity module state, and sends first indication information to an access network device.

In some embodiments of the present disclosure, the UE may send the first indication information to the access network device through a registration request, a service request, a position service request or a specified exchange message, which is not limited by the present disclosure.

In the step 603, the access network device sends the first indication information to a core network device.

In the step 604, the core network device generates second indication information according to multi-subscriber identity module feature information supported by the core network device and/or the access network device.

In the step 605, the core network device sends the second indication information to the access network device.

In the step 606, the access network device sends the second indication information to the UE.

In the step 607, the UE updates local multi-subscriber identity module feature information according to the second indication information.

It should be noted that, for a specific implementation form of each step described above, reference may be made to the detailed description of any embodiment of the present disclosure, which will not be repeated here.

According to the method for exchanging the multi-subscriber identity module feature information in embodiments of the present disclosure, as soon as the UE determines that it is currently in the multi-subscriber identity module state, it can send, to the core network device via the access network device, the first indication information for indicating that it is in the multi-subscriber identity module state, and then the core network device can send, to the UE via the access network device, the multi-subscriber identity module feature information supported by the core network device and/or the access network device, thereby saving the resources used during the exchange of the multi-subscriber identity module feature information between the UE and the network side.

FIG. 7 is a schematic structural diagram of an apparatus for exchanging multi-subscriber identity module feature information provided by an embodiment of the present disclosure, and the apparatus can be applied to a UE. As shown in FIG. 7, the apparatus 700 includes:
a sending module 710, configured to send first indication information to an access network device, and the indication information is used to determine whether the UE is currently in a multi-subscriber identity module state; and
a receiving module 720, configured to receive second indication information sent by the access network device, and the second indication information is used to indicate multi-subscriber identity module feature information supported by a core network device and/or the access network device.

In some embodiments of the present disclosure, the sending module 710 is specifically configured to:
send the first indication information to the access network device through a registration request;
   or
send the first indication information to the access network device through a service request;
   or
send the first indication information to the access network device through a position update request.

In some embodiments of the present disclosure, the apparatus 700 further includes:
a processing module 730, configured to determine a value of a specified bit in the first indication information according to whether the UE is currently in the multi-subscriber identity module state.

In some embodiments of the present disclosure, the processing module 730 is configured to update local multi-subscriber identity module feature information according to the second indication information.

In some embodiments of the present disclosure, the multi-subscriber identity module feature information includes at least one of the following: a paging cause, a busy indication, multi-subscriber identity module leaving, a filtering rule and paging collision avoidance.

It should be noted that the above explanations for embodiments of the method for exchanging the multi-subscriber identity module feature information provided in FIGS. 1 to 6 are also applicable to the apparatus for exchanging the multi-subscriber identity module feature information in this embodiment, which will not be repeated here.

According to the apparatus for exchanging the multi-subscriber identity module feature information in embodiments of the present disclosure, during the exchange of the multi-subscriber identity module feature information with the network side, the UE only sends to the access network device the first indication information for determining whether it is currently in the multi-subscriber identity module state, thereby saving resources used in the negotiation process.

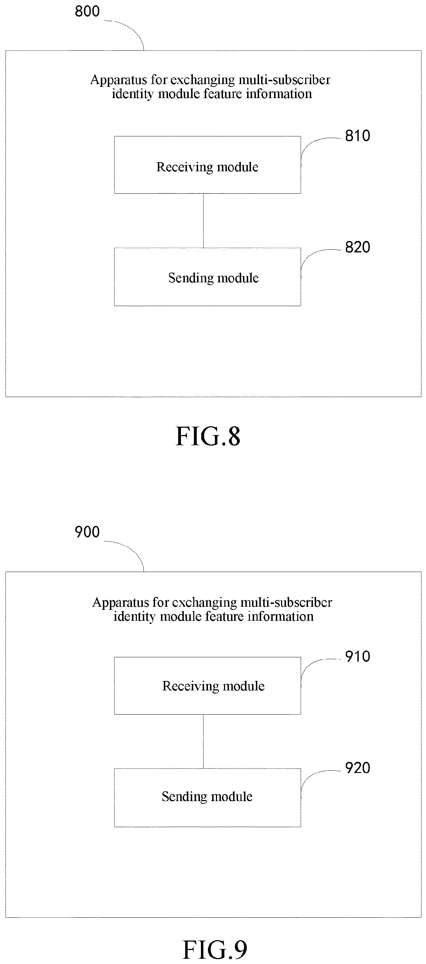

FIG. 8 is a schematic structural diagram of another apparatus for exchanging multi-subscriber identity module feature information provided by an embodiment of the present disclosure, and the apparatus is suitable for an access network device. As shown in FIG. 8, the apparatus 800 for exchanging the multi-subscriber identity module feature information includes: a receiving module 810 and a sending module 820.

The receiving module 810 is configured to receive first indication information sent by a User Equipment (UE), and the first indication information is used to determine whether the User Equipment (UE) is currently in a multi-subscriber identity module state.

The sending module 820 is configured to send the first indication information to a core network device.

The receiving module 810 is further configured to receive second indication information sent by the core network device, and the second indication information is used to indicate multi-subscriber identity module feature information supported by the core network device and/or the access network device.

The sending module 820 is further configured to send the second indication information to the UE.

In some embodiments of the present disclosure, the receiving module 810 is specifically configured to:
receive, through a registration request, the first indication information sent by the UE;
   or
receive, through a service request, the first indication information sent by the UE;
   or
receive, through a position update request, the first indication information sent by the UE.

In some embodiments of the present disclosure, the multi-subscriber identity module feature information includes at least one of the following:
a paging cause, a busy indication, multi-subscriber identity module leaving, a filtering rule and paging collision avoidance.

It should be noted that the above explanations for embodiments of the method for exchanging the multi-subscriber identity module feature information provided in FIGS. 1 to 6 are also applicable to the apparatus for exchanging the multi-subscriber identity module feature information in this embodiment, which will not be repeated here.

According to the apparatus for exchanging the multi-subscriber identity module feature information in embodiments of the present disclosure, after the access network device obtains the first indication information sent by the UE, it can send the first indication information to the core network device, and then send the second indication information returned by the core network device to the UE, thereby saving resources used during the exchange of the multi-subscriber identity module feature information between the UE and the network side.

FIG. 9 is a schematic structural diagram of another apparatus for exchanging multi-subscriber identity module feature information provided by an embodiment of the present disclosure, and the apparatus can be applied to a core network device. As shown in FIG. 9, the apparatus 900 includes: a receiving module 910 and a sending module 920.

The receiving module 910 is configured to receive first indication information sent by an access network device, and the first indication information is used to determine whether a UE is currently in a multi-subscriber identity module state.

The sending module 920 is configured to send second indication information to the access network device, and the second indication information is used to indicate multi-subscriber identity module feature information supported by the core network device and/or the access network device.

In some embodiments of the present disclosure, the sending module 920 is specifically configured to:
determine that the UE is in the multi-subscriber identity module state, and send the second indication information to the access network device.

In some embodiments of the present disclosure, the sending module 920 is specifically configured to:
determine multi-subscriber identity module feature information currently supported by the UE according to a value of a specified bit in the first indication information.

In some embodiments of the present disclosure, the apparatus 900 further includes:
a processing module 930, configured to generate the second indication information according to the multi-subscriber identity module feature information supported by the core network device and/or the access network device.

In some embodiments of the present disclosure, the multi-subscriber identity module feature information includes at least one of the following: a paging cause, a busy indication, multi-subscriber identity module leaving, a filtering rule and paging collision avoidance.

According to the apparatus for exchanging the multi-subscriber identity module feature information in embodiments of the present disclosure, after the access network device obtains the first indication information sent by the UE, it can send the first indication information to the core network device, and then send the second indication information returned by the core network device to the UE, thereby saving resources used during the exchange of the multi-subscriber identity module feature information between the UE and the network side.

In order to implement the above embodiments, the present disclosure also provides a communication device.

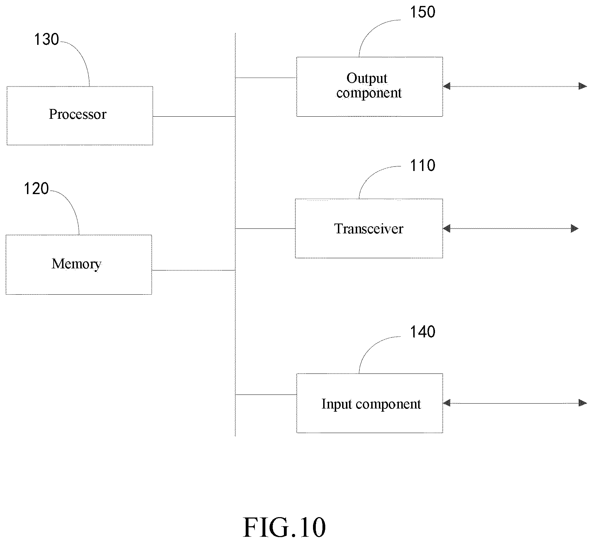

As shown in FIG. 10, the communication device provided by embodiments of the present disclosure includes: a transceiver 110; a memory 120; and a processor 130, connected to the transceiver 110 and the memory 120, respectively, and configured to, by executing computer-executable instructions in the memory 120, control the wireless signal transmission and reception of the transceiver 110, and be capable of implementing the method for exchanging the multi-subscriber identity module feature information described in any of the above embodiments.

That is, the communication device may be the aforementioned UE, AMF or AN, which is not limited by the present disclosure.

The processor 130 may include various types of storage media, which are non-transitory computer storage media. The processor 130 may be connected to the memory 120 through a bus or the like, and is configured to read an executable program stored in the memory 120, so as to implement, for example, at least one of the methods shown in FIG. 1 to FIG. 6.

In order to realize the above-mentioned embodiments, the present disclosure also provides a computer storage medium.

The computer storage medium provided by embodiments of the present disclosure stores an executable program, and the executable program, when executed by a processor, can implement the aforementioned method, for example, at least one of the methods shown in FIG. 1 to FIG. 6.

The communication device in embodiments of the present disclosure is intended to represent various forms of digital computers, such as a laptop, a desktop, a workstation, a personal digital assistant, a server, a blade server, a mainframe computer, and other suitable computers. The communication device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein.

The communication device may include: one or more processors 130 (one processor 130 is taken as an example in FIG. 10), a memory 120, and interfaces configured to connect the respective components, including high-speed interfaces and low-speed interfaces. The respective components are interconnected using different buses and may be mounted at a common motherboard or in other manners as desired. The processor may process instructions for execution within the communication device, including instructions stored in or at the memory to display graphical information for a GUI at an external input/output apparatus, such as a display device coupled to the interface. In other implementations, a plurality of processors and/or a plurality of buses may be used with a plurality of memories, if desired. The memory 120 is configured as the non-transitory computer readable storage medium provided by the present disclosure. The memory stores instructions executable by the at least one processor to cause the at least one processor to perform the method for exchanging the multi-subscriber identity module feature information provided by the present disclosure. The non-transitory computer readable storage medium according to the present disclosure stores computer instructions for causing a computer to perform the method for exchanging the multi-subscriber identity module feature information provided by the present disclosure.

The memory 120 which is a non-transitory computer readable storage medium may be configured to store non-transitory software programs, non-transitory computer executable programs and modules, such as program instructions/modules corresponding to the method for exchanging the multi-subscriber identity module feature information in the embodiments of the present disclosure (for example, the sending module 710 and the receiving module 720 shown in FIG. 7 or the receiving module 810 and the sending module 820 shown in FIG. 8, etc.). The processor 130 executes various functional applications and data processing of a server, that is, implements the method for exchanging the multi-subscriber identity module feature information in the above-mentioned method embodiments, by running the non-transitory software programs, instructions, and modules stored in the memory 120.

The memory 120 may include a program storage area and a data storage area, the program storage area may store an operating system and an application program required for at least one function, and the data storage area may store data created according to use of the communication device for positioning, or the like. Furthermore, the memory 120 may include a high-speed random access memory, or a non-transitory memory, such as at least one magnetic disk storage device, a flash memory device, or other non-transitory solid state storage devices. In some embodiments, the memory 120 may include memories remote from the processor 130, and such remote memories may be connected to the communication device for positioning via a network. Examples of such a network include, but are not limited to, the Internet, intranets, local area networks, mobile communication networks, and combinations thereof.

The communication device may further include an input component 140 and an output component 150. The processor 130, the memory 120, the input component 140 and the output component 150 may be connected by a bus or other means, and FIG. 10 takes the connection by a bus as an example.

The input component 140 may receive input numeric or character information and generate key signal input related to user settings and function control of the communication device for positioning, such as a touch screen, a keypad, a mouse, a track pad, a touch pad, a pointing stick, one or more mouse buttons, a trackball, a joystick and other input apparatuses. The output component 150 may include a display device, an auxiliary lighting apparatus (for example, an LED) and a tactile feedback apparatus (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, ASICs (application specific integrated circuits), computer hardware, firmware, software, and/or combinations thereof. These various implementations may be implemented in one or more computer programs which are executable and/or interpretable on a programmable system including at least one programmable processor, and the programmable processor may be special or general, and may receive data and instructions from, and transmitting data and instructions to, a storage system, at least one input apparatus, and at least one output apparatus.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLDs)) for providing machine instructions and/or data to a programmable processor, including a machine readable medium which receives machine instructions as a machine readable signal. The term "machine readable signal" refers to any signal for providing machine instructions and/or data to a programmable processor.

To provide interaction with a user, the systems and technologies described here may be implemented on a computer having: a display apparatus (for example, a Cathode Ray Tube (CRT) or liquid crystal display (LCD) monitor) for displaying information to the user; and a keyboard and a pointing apparatus (for example, a mouse or a trackball) by which the user may provide an input to the computer. Other kinds of apparatuses may also be used to provide interaction with the user; for example, feedback provided to a user may be any form of sensory feedback (for example, visual feedback, auditory feedback, or tactile feedback); and the input from the user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a Local Area Network (LAN), a Wide Area Network (WAN) and the Internet.

A computer system may include a client and a server. Generally, the client and the server are remote from each other and interact through the communication network. The relationship between the client and the server is generated by virtue of computer programs which are run on respective computers and have a client-server relationship to each other.

It should be understood that various forms of the flows shown above may be used and reordered, and steps may be added or deleted. For example, individual steps described in the present disclosure may be executed in parallel, sequentially, or in different orders, and are not limited herein as long as the desired results of the technical solution disclosed in the present disclosure may be achieved.

The above-mentioned specific embodiments do not limit the protection scope of the present disclosure. It should be understood by those skilled in the art that various modifications, combinations, subcombinations and replacements may be made to the method steps, apparatuses or device units in the method, apparatus and device embodiments in the present disclosure depending on design requirements and other factors. Any modifications, equivalent replacements, and improvements made within the spirit and principles of the present disclosure should be included within the protection scope of the present disclosure.

## Claims

1. A method for exchanging multi-subscriber identity module feature information, applied to a User Equipment (UE), and comprising:
sending first indication information to an access network device, wherein the first indication information is used to determine whether the UE is currently in a multi-subscriber identity module state; and
receiving second indication information sent by the access network device, wherein the second indication information is used to indicate multi-subscriber identity module feature information supported by a core network device and/or the access network device.

2. The method according to claim 1, wherein the sending the first indication information to the access network device comprises:
sending the first indication information to the access network device through a registration request; or
sending the first indication information to the access network device through a service request; or
sending the first indication information to the access network device through a position update request.

3. The method according to claim 1, further comprising:
determining a value of a specified bit in the first indication information according to whether the UE is currently in the multi-subscriber identity module state.

4. The method according to claim 3, further comprising:
updating local multi-subscriber identity module feature information according to the second indication information.

5. The method according to any one of claims 1-4, wherein the multi-subscriber identity module feature information comprises at least one of the following: a paging cause, a busy indication, multi-subscriber identity module leaving, a filtering rule and paging collision avoidance.

6. A method for exchanging multi-subscriber identity module feature information, applied to an access network device, and comprising:
receiving first indication information sent by a User Equipment (UE), wherein the first indication information is used to determine whether the UE is currently in a multi-subscriber identity module state;
sending the first indication information to a core network device;
receiving second indication information sent by the core network device, wherein the second indication information is used to indicate multi-subscriber identity module feature information supported by the core network device and/or the access network device; and
sending the second indication information to the UE.

7. The method according to claim 6, wherein the receiving the first indication information sent by the User Equipment (UE) comprises:
receiving, through a registration request, the first indication information sent by the UE; or
receiving, through a service request, the first indication information sent by the UE; or
receiving, through a position update request, the first indication information sent by the UE.

8. The method according to claim 6 or 7, wherein the multi-subscriber identity module feature information comprises at least one of the following: a paging cause, a busy indication, multi-subscriber identity module leaving, a filtering rule and paging collision avoidance.

9. A method for exchanging multi-subscriber identity module feature information, applied to a core network device, and comprising:
receiving first indication information sent by an access network device, wherein the first indication information is used to determine whether a User Equipment (UE) is currently in a multi-subscriber identity module state; and
sending second indication information to the access network device, wherein the second indication information is used to indicate multi-subscriber identity module feature information supported by the core network device and/or the access network device.

10. The method according to claim 9, wherein the sending the second indication information to the access network device comprises:
determining that the UE is in the multi-subscriber identity module state, and sending the second indication information to the access network device.

11. The method according to claim 10, wherein the determining that the UE is in the multi-subscriber identity module state comprises:
determining multi-subscriber identity module feature information currently supported by the UE according to a value of a specified bit in the first indication information.

12. The method according to claim 9, further comprising:
generating the second indication information according to the multi-subscriber identity module feature information supported by the core network device and/or the access network device.

13. The method according to any one of claims 9-12, wherein the multi-subscriber identity module feature information comprises at least one of the following: a paging cause, a busy indication, multi-subscriber identity module leaving, a filtering rule and paging collision avoidance.

14. An apparatus for exchanging multi-subscriber identity module feature information, applied to a User Equipment (UE), and comprising:
a sending module, configured to send first indication information to an access network device, wherein the indication information is used to determine whether the UE is currently in a multi-subscriber identity module state; and
a receiving module, configured to receive second indication information sent by the access network device, wherein the second indication information is used to indicate multi-subscriber identity module feature information supported by a core network device and/or the access network device.

15. The apparatus according to claim 14, wherein the sending module is specifically configured to:
send the first indication information to the access network device through a registration request; or
send the first indication information to the access network device through a service request; or
send the first indication information to the access network device through a position update request.

16. The apparatus according to claim 14, further comprising:
a processing module, configured to determine a value of a specified bit in the first indication information according to whether the UE is currently in the multi-subscriber identity module state.

17. The apparatus according to claim 16, wherein the processing module is further configured to update local multi-subscriber identity module feature information according to the second indication information.

18. The apparatus according to any one of claims 14-17, wherein the multi-subscriber identity module feature information comprises at least one of the following: a paging cause, a busy indication, multi-subscriber identity module leaving, a filtering rule and paging collision avoidance.

19. An apparatus for exchanging multi-subscriber identity module feature information, applied to an access network device, and comprising:
a receiving module, configured to receive first indication information sent by a User Equipment (UE), wherein the first indication information is used to determine whether the User Equipment (UE) is currently in a multi-subscriber identity module state; and
a sending module, configured to send the first indication information to a core network device;
wherein the receiving module is further configured to receive second indication information sent by the core network device, wherein the second indication information is used to indicate multi-subscriber identity module feature information supported by the core network device and/or the access network device; and
the sending module is further configured to send the second indication information to the UE.

20. The apparatus according to claim 19, wherein the receiving module is specifically configured to:
receive, through a registration request, the first indication information sent by the UE; or
receive, through a service request, the first indication information sent by the UE; or
receive, through a position update request, the first indication information sent by the UE.

21. The apparatus according to claim 19 or 20, wherein the multi-subscriber identity module feature information comprises at least one of the following: a paging cause, a busy indication, multi-subscriber identity module leaving, a filtering rule and paging collision avoidance.

22. An apparatus for exchanging multi-subscriber identity module feature information, applied to a core network device, and comprising:
a receiving module, configured to receive first indication information sent by an access network device, wherein the first indication information is used to determine whether a User Equipment (UE) is currently in a multi-subscriber identity module state; and
a sending module, configured to send second indication information to the access network device, wherein the second indication information is used to indicate multi-subscriber identity module feature information supported by the core network device and/or the access network device.

23. The apparatus according to claim 22, wherein the sending module is specifically configured to:
determine that the UE is in the multi-subscriber identity module state, and send the second indication information to the access network device.

24. The apparatus according to claim 23, wherein the sending module is specifically configured to:
determine multi-subscriber identity module feature information currently supported by the UE according to a value of a specified bit in the first indication information.

25. The apparatus according to claim 22, further comprising:
a processing module, configured to generate the second indication information according to the multi-subscriber identity module feature information supported by the core network device and/or the access network device.

26. The apparatus according to any one of claims 22-25, wherein the multi-subscriber identity module feature information comprises at least one of the following: a paging cause, a busy indication, multi-subscriber identity module leaving, a filtering rule and paging collision avoidance.

27. A communication device, comprising a processor, a transceiver, a memory and a computer program stored in the memory, wherein the processor runs the computer program to implement the method for exchanging the multi-subscriber identity module feature information according to any one of claims 1-13.

28. A computer storage medium storing an executable program, wherein the executable program, when executed by a processor, is capable of implementing the method for exchanging the multi-subscriber identity module feature information according to any one of claims 1-13.
